# EUROPÄISCHE PATENTSCHRIFT

(11) **EP 2 524 997 B1**
(45) Veröffentlichungstag und Bekanntmachung des Hinweises auf die Patenterteilung: **01.09.2021**
(21) Anmeldenummer: 12002912.9
(22) Anmeldetag: 25.04.2012
(51) Int. Cl.: E02F 9/22, F15B 11/064, F15B 15/14, F15B 21/14, F16F 9/06

(54) **Arbeitsgerät, insbesondere Bagger oder Maschine zum Materialumschlag**
Work device, in particular digger or machine for materials handling
Outil de travail, en particulier machine d'excavation ou machine de transvasement de matériel

(30) Priorität: 18.05.2011 DE 102011106260
(43) Veröffentlichungstag der Anmeldung: 21.11.2012
(73) Patentinhaber: Liebherr-Hydraulikbagger GmbH, 88457 Kirchdorf/Iller (DE)
(72) Erfinder: Egenrieder, Philipp, Dipl.-Ing. (FH), 89075 Ulm (DE); Lavergne, Hans-Peter, 87779 Trunkelsberg (DE)
(74) Vertreter: Laufhütte, Dieter

(56) Entgegenhaltungen:
- EP-A2- 1 083 338
- EP-A2- 2 148 014
- WO-A1-2008/013466
- DE-A1- 4 108 801
- DE-A1-102007 050 350
- FR-A1- 2 851 592
- US-A- 3 353 352
- US-A- 5 921 604
- None

## Beschreibung

Die vorliegende Erfindung betrifft ein Arbeitsgerät, insbesondere ein Bagger oder eine Maschine zum Materialumschlag, mit einem über mindestens ein Arbeitshydraulikzylinder bewegbaren Element, wobei mindestens ein Energierückgewinnungszylinder zur Energierückgewinnung aus der Bewegung des bewegbaren Elements vorgesehen ist, welcher bodenseitig mit Gas befüllt ist und ein mit einem Medium befüllten Ringraum aufweist.

Ein solches Arbeitsgerät ist aus der DE 10 2008 034 582 A1 bekannt, deren Inhalt vollumfänglich zum Gegenstand der vorliegenden Anmeldung gemacht wird. Der Energierückgewinnungszylinder wird dabei z. B. dazu eingesetzt, um bei einer Bewegung des bewegbaren Elementes nach unten die potentielle Energie durch Kompression des Gases in der mit Gas befüllten Bodenseite zu speichern, welche dann zur Unterstützung der Bewegung nach oben wieder zur Verfügung steht. Im gespannten Zustand der Energierückgewinnungszylinder sind dabei üblicherweise große Mengen an Energie in dem komprimierten Gas gespeichert.

Die WO2008013466 A1 offenbart alle Merkmale des Oberbegriffes der Ansprüche 1 und 9.

Aufgabe der vorliegenden Erfindung ist es, den Betrieb eines Arbeitsgerätes, wie es oben beschrieben wurde, sicherer zu machen.

Erfindungsgemäß wird diese Aufgabe durch ein Arbeitsgerät gemäß Anspruch 1 gelöst. Das erfindungsgemäße Arbeitsgerät weist dabei ein über mindestens ein Arbeitshydraulikzylinder bewegbares Element auf, wobei mindestens ein Energierückgewinnungszylinder zur Energierückgewinnung aus der Bewegung des bewegbaren Elements vorgesehen ist, welcher bodenseitig mit Gas befüllt ist und einen mit einem Medium befüllten Ringraum aufweist. Erfindungsgemäß ist dabei vorgesehen, dass ein Flussbegrenzungselement vorgesehen ist, welches bei einem plötzlichen Ausfahren der Kolbenstange den Fluss des Mediums aus dem Ringraum drosselt. Besonders vorteilhaft kommt die vorliegende Erfindung dabei bei einem Bagger oder einer Maschine zum Materialumschlag zum Einsatz, insbesondere bei einer solchen, bei welcher ein um eine horizontale Achse schwenkbarer Ausleger oder Stiel das bewegbare Element bildet.

Die Erfinder der vorliegenden Erfindung haben dabei erkannt, dass die hohe Menge an Energie, welche in einem Energierückgewinnungszylinder im gespannten Zustand gespeichert ist, zu einem Sicherheitsrisiko werden kann, wenn es aus irgendeinem Grund zu einem Defekt an den Lagerstellen oder an tragenden Teilen des Energierückgewinnungszylinders oder an der Ausrüstung kommt. Um im Fall eines solchen Versagens der Lager- bzw. Sicherungspunkte, bei welchem die Kolbenstange nicht mehr mechanisch gesichert ist, ein Ausfahren der Kolbenstange des Energierückgewinnungszylinders mit unkontrollierter Geschwindigkeit zu verhindern, ist erfindungsgemäß das Flussbegrenzungselement vorgesehen, welches bei einem solchen plötzlichen Defekt den Fluss des Mediums aus den Ringraum drosselt. Hierdurch wird gleichzeitig die Geschwindigkeit, mit welcher die Kolbenstange des Energierückgewinnungszylinders ausgefahren wird, kontrolliert. Hierdurch können Schäden am Energierückgewinnungszylinder, am Arbeitsgerät sowie an Personen verhindert werden.

In einer ersten Ausführungsform kann hierfür der Ringraum über das Flussbegrenzungselement mit einem externen Speicher in Verbindung stehen, in welchen das Medium beim Ausfahren der Kolbenstange fließt. Insbesondere ist dabei als externer Speicher ein Zusatzbehälter am Energierückgewinnungszylinder angebaut, welcher das Medium beim Ausfahren der Kolbenstange aufnimmt und beim Einfahren der Kolbenstange das Medium zum Füllen des Ringraums zur Verfügung stellt.

Bevorzugt wird dabei bei der vorliegenden Erfindung ein Medium eingesetzt, welches nicht kompressibel ist. Vorteilhafterweise wird insbesondere Hydrauliköl eingesetzt. Über die Fließgeschwindigkeit des nicht kompressiblen Mediums kann so die Entspannung des Energierückgewinnungszylinders kontrolliert werden.

Erfindungsgemäß wird als Flussbegrenzungselement eine Drossel oder Blende eingesetzt. Vorteilhafterweise ist diese einstellbar, so dass die Fließgeschwindigkeit über die Drossel bzw. Blende eingestellt werden kann.

Ebenso kann als Flussbegrenzungselement eine Ventileinheit eingesetzt werden, insbesondere eine Ventileinheit mit einstellbarem Volumenstrom. Hierfür kann beispielsweise ein Stromventil oder eine Rohrbruchsicherung eingesetzt werden.

In der vorliegenden Erfindung kann der Ringraum über das Flussbegrenzungselement mit der mit Gas befüllten Bodenseite des Energierückgewinnungszylinders in Verbindung stehen. Zum Ausfahren der Kolbenstange muss so ein Gasaustausch zwischen dem Ringraum und der Bodenseite über das Flussbegrenzungselement erfolgen, wodurch ebenfalls die Ausfahrgeschwindigkeit kontrolliert werden kann.

Vorteilhafterweise handelt es sich dabei bei dem Flussbegrenzungsventil um eine Drossel. Vorteilhafterweise kann dabei parallel zur Drossel ein Rückschlagventil angeordnet sein, so dass der Gasstrom zwischen Bodenseite und Ringraum beim Einfahren der Kolbenstange nicht durch die Drossel gedrosselt wird.

In einer möglichen Anwendung der vorliegenden Erfindung begrenzt das Flussbegrenzungselement unabhängig von der übrigen Steuerung des Arbeitsgerätes den Fluss des Mediums aus dem Ringraum und ist insbesondere unabhängig von der Steuerung, welche die Bewegung des bewegbaren Elementes ansteuert.

Die vorliegende Erfindung kommt insbesondere bei solchen Arbeitsgeräten zum Einsatz, bei welchen der Energierückgewinnungszylinder eine hohle Kolbenstange aufweist. In vorteilhafter Weise sind das Arbeitsgerät und der Energierückgewinnungszylinder dabei so aufgebaut, wie dies aus der DE 10 2008 034 582 A1 bekannt ist.

Weiterhin vorteilhafterweise handelt es sich bei dem Arbeitsgerät dabei um ein verfahrbares Arbeitsgerät, insbesondere um einen Bagger oder eine Maschine zum Materialumschlag. Dieses Arbeitsgerät weist ein über mindestens einen Arbeitshydraulikzylinder bewegbares Element auf, wobei der Energierückgewinnungszylinder zur Energierückgewinnung aus der Bewegung beweglichen Elements dient.

Das bewegbare Element des erfindungsgemäßen Arbeitsgerätes ist vorteilhafterweise am Arbeitsgerät um eine horizontale Drehachse schwenkbar angelegt und hierdurch über den oder die Arbeitshydraulikzylinder in einer vertikalen Schwenkebene verschwenkbar. Insbesondere kann es sich bei dem bewegbaren Element dabei um den Stiel eines Baggers oder den Ausleger einer Maschine zum Materialumschlag handeln. Weiterhin vorteilhafterweise weist das verfahrbare Arbeitsgerät einen Unterwagen mit Fahrwerk und einen darauf um eine vertikale Drehachse drehbar angeordneten Oberwagen auf, an welchen das bewegliche Element angelenkt ist.

Am beweglichen Element kann dabei ein Arbeitswerkzeug, zum Beispiel eine Schaufel oder ein Greifer angeordnet sein. Beim Absenken des bewegbaren Elements wird die potentielle Energie des bewegbaren Elements und des Arbeitswerkzeugs über den Energierückgewinnungszylinder gespeichert, um bei der Aufwärtsbewegung des bewegbaren Elements das Ausrüstungsgewicht zumindest teilweise wieder zu kompensieren. Daher muss über die Arbeitshydraulikzylinder weniger Energie aufgewendet werden, um das bewegbare Element nach oben zu bewegen.

Der Energierückgewinnungszylinder ist dabei vorteilhafterweise wie der oder die Arbeitshydraulikzylinder zwischen dem Oberwagen des Arbeitsgeräts und dem bewegbarem Element angeordnet. Der Energierückgewinnungszylinder bewegt sich damit bei einer Bewegung des bewegbaren Elementes parallel zum Arbeitshydraulikzylinder. Das Arbeitsgerät kann so ausgeführt sein, wie dies in der DE 10 2008 034 582 A1 näher dargestellt ist.

Neben dem Arbeitsgerät umfasst die vorliegende Erfindung weiterhin einen Energierückgewinnungszylinder für ein Arbeitsgerät, wie es oben dargestellt wurde. Der Energierückgewinnungszylinder ist dabei bodenseitig mit Gas befüllt und weist einen mit einem Medium befüllten Ringraum auf, wobei ein Flussbegrenzungselement vorgesehen ist, welches beim plötzlichen Ausfahren der Kolbenstange den Fluss des Mediums aus dem Ringraum drosselt. Vorteilhafterweise ist der Energierückgewinnungszylinder dabei so aufgebaut, wie dies oben beschrieben wurde.

Weiterhin umfasst die vorliegende Erfindung ein Verfahren zum Betrieb eines Arbeitsgerätes, insbesondere eines Baggers oder einer Maschine zum Materialumschlag, mit einem über mindestens einen Arbeitshydraulikzylinder bewegbaren Element, wobei mindestens ein Energierückgewinnungszylinder zur Energierückgewinnung aus der Bewegung des bewegbaren Elements vorgesehen ist, welcher bodenseitig mit Gas befüllt ist und ein mit einem Medium befüllten Ringraum aufweist. Erfindungsgemäß sieht das Verfahren dabei vor, dass bei einem ungewollten Ausfahren der Kolbenstange der Fluss des Mediums aus dem Ringraum gedrosselt wird. Insbesondere wird dabei der Fluss des Mediums aus dem Ringraum gedrosselt, wenn durch ein Defekt an den Lagerstellen oder den tragenden Teilen des Energierückgewinnungszylinders oder des Arbeitsgerätes die Kolbenstange nicht mehr mechanisch gesichert ist, so dass die im Energierückgewinnungszylinder gespeicherte Energie zu einem unkontrollierten Ausfahren der Kolbenstange führen würde. Durch die erfindungsgemäße Drosselung des Flusses des Mediums aus dem Ringraum wird das Ausfahren der Kolbenstange daher auch im Schadensfall kontrolliert, so dass Schäden am Bauteil und Umgebung verhindert werden. Vorteilhafterweise ist der Energierückgewinnungszylinder dabei so aufgebaut und wird so betrieben, wie dies oben beschrieben wurde.

Die vorliegende Erfindung wird nun anhand von Ausführungsbeispielen sowie Zeichnungen näher dargestellt.

Dabei zeigen:
- Fig. 1:: ein erstes Ausführungsbeispiel der vorliegenden Erfindung mit ausgefahrener Kolbenstange,
- Fig. 2:: das in Fig. 1 gezeigte erste Ausführungsbeispiel mit eingefahrener Kolbenstange, und
- Fig. 3:: ein zweites Ausführungsbeispiel der vorliegenden Erfindung.

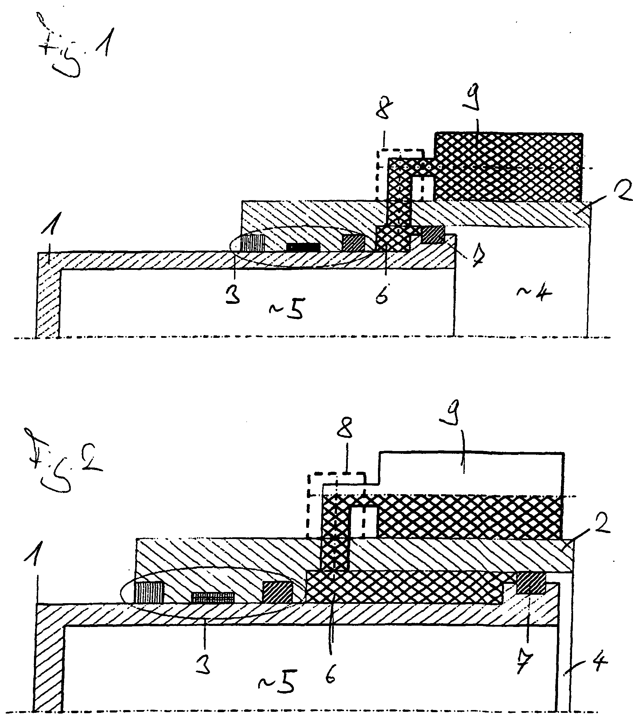

Anhand der Figuren 1-3 sollen nun Ausführungsbeispiele eines erfindungsgemäßen Arbeitsgerätes beschrieben werden. Das Arbeitsgerät weist dabei ein über mindestens einen Arbeits-Hydraulikzylinder bewegbares Element auf, wobei mindestens ein Energierückgewinnungszylinder zur Energierückgewinnung aus der Bewegung des bewegbaren Elements vorgesehen ist. Der Energierückgewinnungszylinder weist dabei eine mit Gas befüllte Bodenseite auf und dient damit selbst als Energiespeicher für die Energierückgewinnung aus der Bewegung des bewegbaren Elements. Bei einer Bewegung der Kolbenstange des Energierückgewinnungszylinders wird dabei das bodenseitig gespeicherte unter Druck stehende Gas komprimiert. Die hierdurch gespeicherte Energie steht dann bei einer Aufwärtsbewegung der Kolbenstange zur Unterstützung des Arbeitshydraulikzylinders wieder zur Verfügung.

Befindet sich ein erfindungsgemäßer Energierückgewinnungszylinder in einem gespannten Zustand, so speichert er große Mengen an innerer Energie. Kommt es in diesem Zustand aus irgendeinem Grund zu einem Defekt an den Lagerstellen oder an anderen tragenden Teilen des Energierückgewinnungszylinders oder an der Ausrüstung, so könnte sich die gespeicherte Energie ohne eine weitere Sicherung unkontrolliert entfalten. Die vorliegende Erfindung verhindert nun, dass diese gespeicherte Energie dazu führt, dass sich die Kolbenstange des Energierückgewinnungszylinders mit unkontrollierter Geschwindigkeit ausfährt und Schäden am Energierückgewinnungszylinder, am Arbeitsgerät oder der Umgebung verursacht.

Die in Fig. 1 bis 3 gezeigten zwei Ausführungsbeispiele der vorliegenden Erfindung basieren dabei auf einem Energierückgewinnungszylinder mit einer Kolbenstange 1, welche in einem Zylindermantel 2 bewegbar angeordnet ist. Die Bodenseite 4 des Zylindermantels ist dabei mit Gas befüllt. Weiterhin ist die Kolbenstange 1 hohl ausgeführt und zur Bodenseite hin offen, so dass das Innere 5 der Kolbenstange 1 ebenfalls mit Gas befüllt ist.

Bei dem erfindungsgemäßen Rückgewinnungszylinder handelt es sich dabei um einen zweiseitigen Zylinder, so dass zwischen der Kolbenstange 1 und dem Zylindermantel 2 weiterhin ein Ringraum 6 angeordnet ist. Dabei ist ein Dichtungspaket 3 vorgesehen, welches die Kolbenstange 1 gegen den Zylindermantel 2 abdichtet, sowie eine Kolbendichtung 7, welche den Ringraum 6 gegen die Bodenseite 4 abdichtet.

Bei dem in Figuren 1 und 2 gezeigten ersten Ausführungsbeispiel der vorliegenden Erfindung ist der Ringraum 6 mit einem nicht kompressiblen Medium, vorzugsweise Hydrauliköl, befüllt. Der Ringraum 6 steht dabei über ein Flussbegrenzungselement 8 mit einem externen Behälter 9 in Verbindung. Kann sich der unter Druck stehende Energierückgewinnungszylinder z. B. durch ein Defekt der Lagerstellen unkontrolliert entspannen, so muss das im Ringraum 6 befindliche Medium durch das Flussbegrenzungselement hindurch in den externen Behälter 9 fließen. Hierdurch ist es dem Zylinder nicht mehr möglich, sich unkontrolliert zu entspannen.

Das Flussbegrenzungselement weist eine Drossel, eine Blende oder eine Ventileinheit auf. Vorteilhafterweise ist dabei die Fließgeschwindigkeit durch das Flussbegrenzungselement einstellbar. Insbesondere kann sich bei der Ventileinheit dabei um ein Stromventil oder eine Rohrbruchsicherung handeln.

Fig. 1 zeigt dabei den erfindungsgemäßen Energierückgewinnungszylinder mit ausgefahrener Kolbenstange 1 und damit mit gefülltem Zusatzbehälter 9. Fig. 2 zeigt den erfindungsgemäßen Energierückgewinnungszylinder mit eingefahrener Kolbenstange 1 und damit mit teilweise entleertem Zusatzbehälter 9.

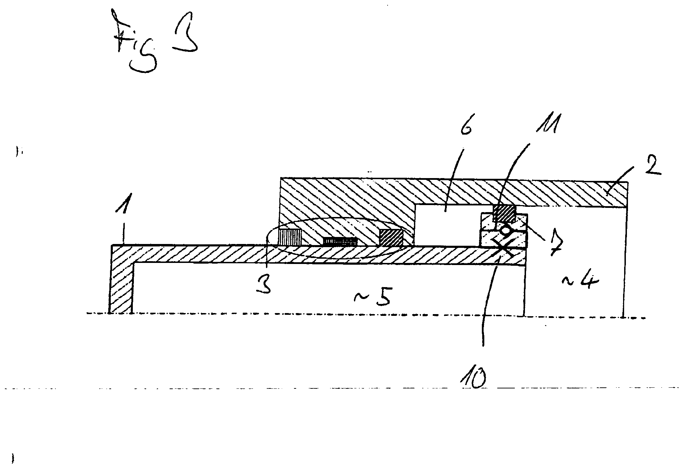

Bei dem in Fig. 3 gezeigten zweiten Ausführungsbeispiel ist der Ringraum 6 dagegen mit Gas befüllt und steht über das Flussbegrenzungselement 10 mit der Bodenseite 4 in Verbindung. Hierdurch wird das Gas beim Überströmen zwischen dem Ringraum 6 und der Bodenseite 4 gedrosselt, so dass ebenfalls ein unkontrolliertes Ausfahren der Kolbenstange 1 verhindert wird. Als Flussbegrenzungselement wird dabei vorteilhafterweise eine Drossel 10 eingesetzt. Vorteilhafterweise ist parallel hierzu ein Rückschlagventil 11 vorgesehen, welches einen freien Fluss des Gases von der Bodenseite 4 in den Ringraum 6 ermöglicht.

Die vorliegende Erfindung sichert so ein kontrolliertes Entspannen bzw. Ausfahren eines unter hohem Druck stehenden Energierückgewinnungszylinders, wenn dieser durch einen Defekt eines tragenden Teiles nicht mehr mechanisch gesichert ist.

## Patentansprüche

1. Arbeitsgerät, insbesondere Bagger oder Maschine zum Materialumschlag, mit einem über mindestens einen Arbeits-Hydraulikzylinder bewegbaren Element, wobei mindestens ein Energierückgewinnungszylinder zur Energierückgewinnung aus der Bewegung des bewegbaren Elements vorgesehen ist, welcher bodenseitig mit Gas befüllt ist und eine Kolbenstange (1) sowie einen mit einem Medium befüllten Ringraum (6) aufweist, wobei ein Flussbegrenzungselement vorgesehen ist, welches bei einem plötzlichen Ausfahren der Kolbenstange (1) des Energierückgewinnungszylinders den Fluss des Mediums aus dem Ringraum drosselt und damit die Geschwindigkeit, mit welcher die Kolbenstange (1) des Energierückgewinnungszylinders ausgefahren wird, kontrolliert,
**dadurch gekennzeichnet, dass**
es sich bei dem Flussbegrenzungsmittel (10) um eine Drossel, eine Blende und/oder eine Ventileinheit handelt.

2. Arbeitsgerät nach Anspruch 1, wobei der Ringraum (6) über das Flussbegrenzungselement mit einem externen Speicher (9) in Verbindung steht, in welcher das Medium bei einem Ausfahren der Kolbenstange (1) fließt.

3. Arbeitsgerät nach Anspruch 1 oder 2, wobei das Medium nicht kompressibel ist.

4. Arbeitsgerät nach einem der vorangegangenen Ansprüche, wobei es sich bei dem Flussbegrenzungselement (10) um eine Ventileinheit mit einstellbarem Volumenstrom handelt.

5. Arbeitsgerät nach Anspruch 1, wobei der Ringraum über das Flussbegrenzungselement (10) mit der mit Gas befüllten Bodenseite des Energierückgewinnungszylinders in Verbindung steht.

6. Arbeitsgerät nach Anspruch 5, wobei es sich bei dem das Flussbegrenzungselement (10) um eine Drossel handelt.

7. Arbeitsgerät nach Anspruch 6, wobei parallel zur Drossel (10) ein Rückschlagventil (11) angeordnet ist.

8. Arbeitsgerät nach einem der vorangegangenen Ansprüche, wobei der Energierückgewinnungszylinder eine hohle Kolbenstange (1) aufweist.

9. Verfahren zum Betrieb eines Arbeitsgerätes, insbesondere eines Baggers oder einer Maschine zum Materialumschlag, mit einem über mindestens einen Arbeits-Hydraulikzylinder bewegbaren Element, wobei mindestens ein Energierückgewinnungszylinder zur Energierückgewinnung aus der Bewegung des bewegbaren Elements vorgesehen ist, welcher bodenseitig mit Gas befüllt ist und eine Kolbenstange (1) sowie einen mit einem Medium befüllten Ringraum (6) aufweist, **dadurch gekennzeichnet,**
**dass** bei einem ungewollten Ausfahren der Kolbenstange (1) der Fluss des Mediums aus dem Ringraum (6) mittels eines Flussbegrenzungselements gedrosselt und damit die Geschwindigkeit, mit welcher die Kolbenstange (1) des Energierückgewinnungszylinders ausgefahren wird, kontrolliert wird, wobei es sich bei dem Flussbegrenzungselement (10) um eine Drossel, eine Blende und/oder eine Ventileinheit handelt.

## Claims

1. A working apparatus, in particular an excavator or a machine for material handling, having an element movable via at least one hydraulic working cylinder, wherein at least one energy recovery cylinder is provided for recovering energy from the movement of the movable element, said energy recovering cylinder being filled with gas at the base side and having a piston rod (1) and an annular space (6) filled with a medium, wherein a flow restriction element is provided which restricts the flow of the medium out of the annular space on a sudden moving out of the piston rod (1) of the energy recovery cylinder and thus controls the speed at which the piston rod (1) of the energy recovery cylinder is moved out,
**characterized in that**
the flow restriction element (10) is a restrictor, a diaphragm, and/or a valve unit.

2. A working apparatus in accordance with claim 1, wherein the annular space (6) is in communication via the flow restriction element with an external reservoir (9) in which the medium flows on a moving out of the piston rod (1).

3. A working apparatus in accordance with claim 1 or claim 2, wherein the medium is not compressible.

4. A working apparatus in accordance with one of the preceding claims, wherein the flow restriction element (10) is a valve unit having an adjustable volume.

5. A working apparatus in accordance with claim 1, wherein the annular space is in communication with the base side of the energy recovery cylinder filled with gas via the flow restriction element)10).

6. A working apparatus in accordance with claim 5, wherein the flow restriction element(10) is a restrictor.

7. A working apparatus in accordance with claim 6, wherein a check valve (11) is arranged parallel to the restrictor (10).

8. A working apparatus in accordance with one of the preceding claims, wherein the energy recovery cylinder has a hollow piston rod (1).

9. A method of operating a working apparatus, in particular an excavator or a machine for material handling, having an element movable via at least one hydraulic working cylinder, wherein at least one energy recovery cylinder is provided for recovering energy from the movement of the movable element, said energy recovery cylinder being filled with gas at the base side and having a piston rod (1) and an annular space (6) filled with a medium,
**characterized in that**
the flow of the medium out of the annular space is restricted by means of a flow restriction element on an unwanted moving out of the piston rod (1) and thus the speed at which the piston rod (1) of the energy recovery cylinder is moved out is controlled, with the flow restriction element (10) being a restrictor, a diaphragm, and/or a valve unit

## Revendications

1. Outil de travail, en particulier machine d'excavation ou machine de transvasement de matériaux, comprenant un élément déplaçable par le biais d'au moins un vérin hydraulique de travail, au moins un vérin de récupération d'énergie étant prévu pour la récupération d'énergie produite par le déplacement de l'élément déplaçable, ledit vérin de récupération d'énergie étant rempli de gaz côté fond et comportant une tige de piston (1) ainsi qu'un espace annulaire (6) rempli d'un milieu,
un élément de limitation d'écoulement étant prévu, qui restreint l'écoulement du milieu provenant de l'espace annulaire lors d'une sortie soudaine de la tige de piston (1) du vérin de récupération d'énergie et qui contrôle ainsi la vitesse à laquelle sort la tige de piston (1) du vérin de récupération d'énergie,
**caractérisé en ce que**
le moyen de limitation d'écoulement (10) est une soupape d'étranglement, un diaphragme et/ou une unité de soupape.

2. Outil de travail selon la revendication 1, dans lequel l'espace annulaire (6) est relié, par le biais de l'élément de limitation d'écoulement, à un réservoir (9) externe, dans lequel s'écoule le milieu lors d'une sortie de la tige de piston (1).

3. Outil de travail selon la revendication 1 ou 2, dans lequel le milieu n'est pas compressible.

4. Outil de travail selon l'une des revendications précédentes, dans lequel l'élément de limitation d'écoulement (10) est une unité de soupape avec un débit volumétrique réglable.

5. Outil de travail selon la revendication 1, dans lequel l'espace annulaire est relié au côté fond rempli de gaz du vérin de récupération d'énergie par le biais de l'élément de limitation d'écoulement (10).

6. Outil de travail selon la revendication 5, dans lequel l'élément de limitation d'écoulement (10) est une soupape d'étranglement.

7. Outil de travail selon la revendication 6, dans lequel une soupape antiretour (11) est disposée parallèlement à la soupape d'étranglement (10).

8. Outil de travail selon l'une des revendications précédentes, dans lequel le vérin de récupération d'énergie comporte une tige de piston (1) creuse.

9. Procédé de fonctionnement d'un outil de travail, en particulier d'une machine d'excavation ou d'une machine de transvasement de matériaux, comprenant un élément déplaçable par le biais d'au moins un vérin hydraulique de travail, au moins un vérin de récupération d'énergie étant prévu pour la récupération d'énergie produite par le déplacement de l'élément déplaçable, ledit vérin de récupération d'énergie étant rempli de gaz côté fond et comportant une tige de piston (1) ainsi qu'un espace annulaire (6) rempli d'un milieu,
**caractérisé en ce que**,
lors d'une sortie involontaire de la tige de piston (1), l'écoulement du milieu provenant de l'espace annulaire (6) est restreint au moyen d'un élément de limitation d'écoulement et la vitesse à laquelle la tige de piston (1) sort du vérin de récupération d'énergie est ainsi contrôlée, l'élément de limitation d'écoulement (10) étant une soupape d'étranglement, un diaphragme et/ou une unité de soupape.
